# EUROPÄISCHE PATENTANMELDUNG

(11) **EP 0 721 249 A2**
(43) Veröffentlichungstag der Anmeldung: **10.07.1996**
(21) Anmeldenummer: 95110458.7
(22) Anmeldetag: 05.07.1995
(51) Int. Cl.: H02K 37/14

(54) **Elektromagnetischer Schrittmotor mit zwei Drehrichtungen**

(30) Priorität: 09.01.1995 DE 19500357
(71) Anmelder: Haller, Eckhart W., D-78112 St.Georgen (DE); Stoll-Haller, Doris, D-78112 St. Georgen (DE)
(72) Erfinder: Stechmann, Helmut, D-78056 Villingen-Schwenningen (DE)
(74) Vertreter: Patentanwälte Westphal, Buchner, Mussgnug Neunert, Göhring

(57) **Zusammenfassung**

Elektromagnetischer Schrittmotor mit zwei Drehrichtungen, bestehend aus einem 2-polig diametral magnetisierten Rotor(5) und zwei Magnetspulen(1,2), deren Eisenkreise aus zwei deckungsgleichen, spiegelbildlich angeordneten Statorblechen(3,4) bzw.(11,12) bestehen. Die Anordnung erlaubt eine flache Bauweise, sowie eine rationelle Fertigung mit einer geringen Teilevielfalt.

## Beschreibung

Die vorliegende Erfindung betrifft einen zweiphasigen Schrittmotor mit zwei Drehrichtungen, entsprechend dem Oberbegriff des Patentanspruchs 1.

Ein ähnlicher Schrittmotor ist aus der DE-AS2360370 bekannt, der vier Pole aufweist. Wenn sich der Rotor dieses Motors nicht in der Stellung befindet, die er bei Beginn eines Motorimpulses haben sollte, setzt sich der Rotor in der entgegengesetzten Richtung in Bewegung und behält dann diese Richtung bei.

Weiter sind Motoren bekannt aus der japanischen Patentschrift 54-8815, sowie der DR 3026004, die beide mit drei Statorpolen versehen sind und radial magnetisierte Rotoren aufweisen.

Ein weiterer Motor ist bekannt aus dem US-Patent 4.634.906 mit ineinander verschachtelten Polstücken die einseitig zum axial magnetisierten Scheibenrotor angebracht sind. Aus der DE 3024675C2 ist ein Schrittmotor der eingangs genannten Gattung bekannt geworden, der einfach aufgebaut ist und dessen Einzelteile so gestaltet sind, daß sie relativ einfach zu montieren sind. So bestehen die beiden Statoren jeweils aus einem Spulenkörper mit Statorwicklung, sowie aus zwei zueinander deckungsgleichen Polblechen. Der Schrittmotor besitzt weiter ein Gehäuse, in welches die Bauteile eingesetzt werden. Das Gehäuse ist mit einer Reihe schlitzförmiger Öffnungen versehen, die im Zusammenwirken mit korrespondierend gestalteten radialen Nasen der einzusetzenden Bauteile die erforderliche Positionierung ermöglichen. Die schlitzförmigen Öffnungen im Gehäuse sind von beiden Enden des Gehäuses ausgehend angebracht, so daß der Zusammenbau des Schrittmotors von beiden Seiten her erfolgen muß.

Ein weiterer Schrittmotor mit formgleichen Statorblechen ist bekannt aus DE 4207978C1. Bei diesem Motor sind jedoch die beiden Magnetkreise hintereinander angeordnet mit topfförmig gestalteten Statorblechen. Diese Anordnung hat den Nachteil einer großen Bautiefe. Auch ist aus der AT-PS 283492 ein Einphasen-Schrittmotor bekannt, bei dem das flußführende Statorsystem aus zwei Polblechschalen in symmetrischer Form besteht, die in ein Motorgehäuse eingebaut sind. Die Polblechschalen liegen am Gehäuse an.

Über deren Fixierung bzw. Positionierung in einer bestimmten Winkellage ist jedoch nichts offenbart.

Desweiteren sind Motoren bekannt, deren zwei Spulen hintereinander angeornet sind und einen zylinderförmigen Rotor umfassen. Auch diese Motoren weisen eine erhebliche Bautiefe auf.

Demgegenüber liegt der vorliegenden Erfindung die Aufgabe zugrunde einen elektromagnetischen Schrittmotor mit zwei Drehrichtungen der im Oberbegriff des Patentanspruchs 1 angegebenen Art so auszugestalten, daß er eine möglichst flache Bauform aufweist und darüberhinaus sehr wirtschaftlich zu produzieren ist. Die flache und wirtschaftliche Bauweise ist gefordert bei analogen Funkuhren, immer dann, wenn die Konstruktion einen Schrittmotor mit einer Getriebekette für alle Zeiger vorsieht und gleichzeitig eine sehr hohe Verstellgeschwindigkeit der Zeiger vorwärts und rückwärts gefordert ist. Weitere Anwendungsfälle sind im Bereich der analogen Kfz.-Anzeigeinstrumente zu finden, bei denen digitale Meßwerte in analoge Anzeigewerte umgesetzt werden.

Bei all diesen Anwendungen kommt es auf flache Bauweise und rationelle Fertigungstechnik an. Diese Aufgaben werden erfindungsgemäß mit im Kennzeichen des Patentanspruchs 1 angegebenen Mitteln gelöst. Weiterbildung der Erfindung sind die Unteransprüche 2 und 3.

Die Erfindung wird nachstehend anhand der Zeichnungen dargestellten Ausführungsbeispielen des Erfindungsgegenstandes näher erläutert.

Fig.1 und 2 zeigen eine Ausführungsvariante des Schrittmotors.

Fig.5 und 6 zeigen eine andere Ausfürungsvariante.

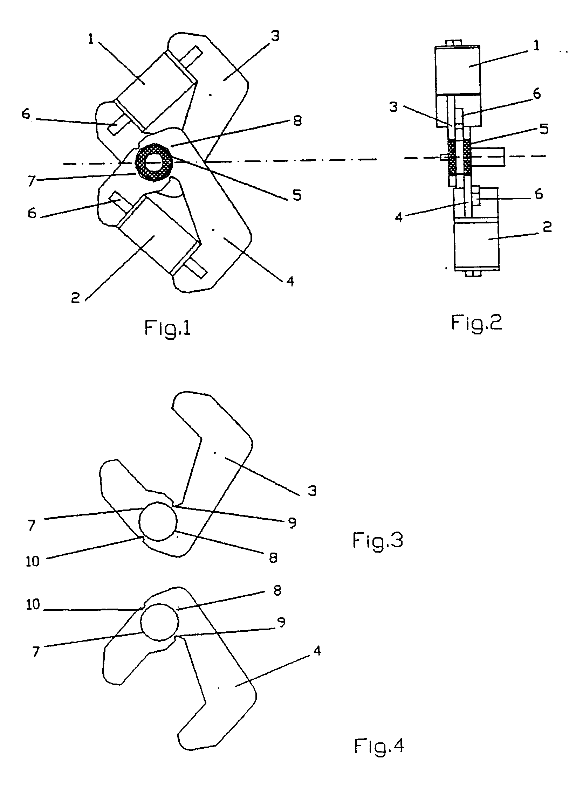

Fig.3 und 4 zeigen Statorbleche in spiegelbildlicher Darstellung.

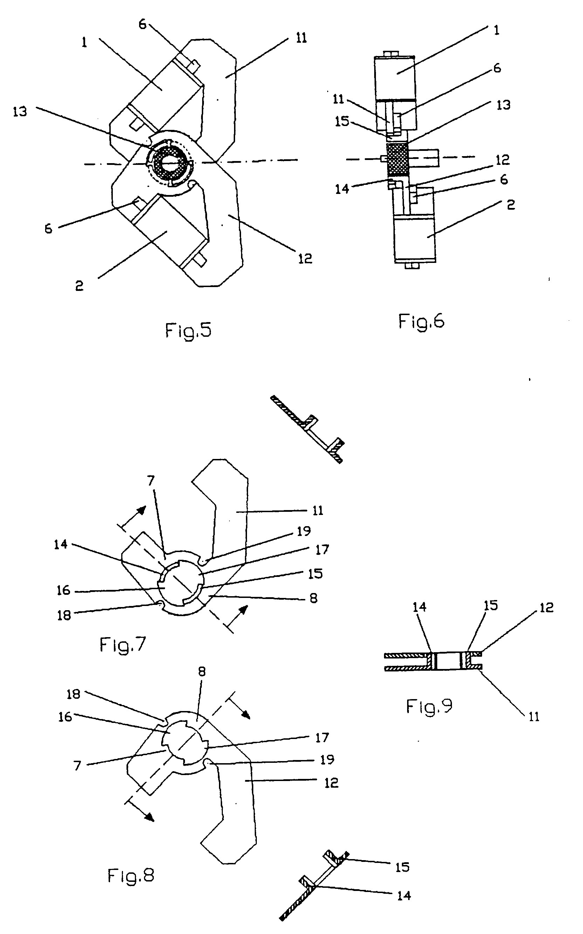

Fig.7, 8 und 9 zeigen eine Ausführungsvariante der Statorbleche.

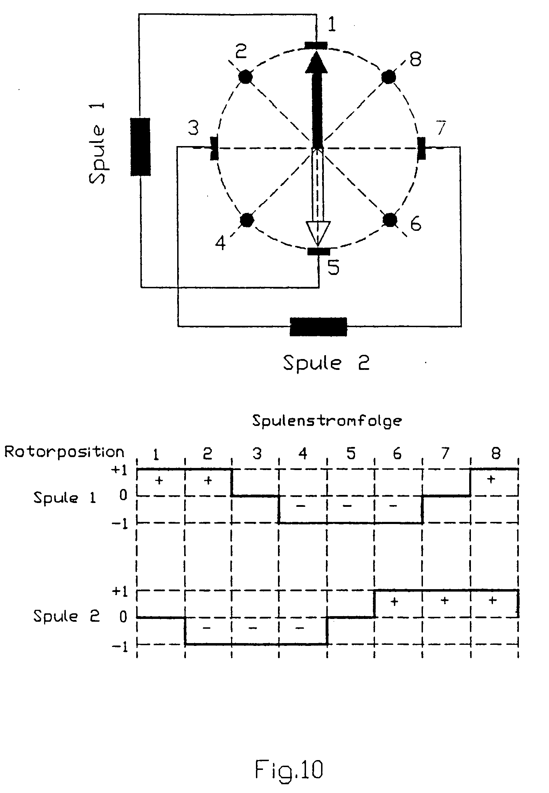

Fig.10 Zeigen die Steuerimpulse, Arbeitsweise und Schrittfolge des Motors.

Der Schrittmotor weist einen Rotor(5) auf, der als zylinderförmiger diametral magnetisierter Permanentmagnet ausgebildet ist. Der Rotor(5) wird konzentrisch von einem Statorpolpaar pro Phase umfaßt. Die Spulenmagnetkreise(1,2) mit den Statorblechen(3,4) der beiden Phasen sind zur Rotationsachse des Rotors(5) hintereinander angeordnet.

Jeder der beiden Statobleche(3,4) ist mit einer Spule(1,2) und einem Rückschlußsteg(6) versehen. Die ebenen Statorbleche(3,4) sind so gestaltet, daß sie in Verbindung mit den Spulen(1,2) eine Einheit pro Phase bilden, die zueinander mit ihren formgleichen Statorblechkonturen(3,4) und Spulen(1,2) zum Umfang des Rotors(5) um 90° versetzt sind. Die zwei Polpaare(7,8) eines jeden Statorbleches(3,4) sind jeweils durch zwei Sättigungsstege(9,10) zu einer Einheit verbunden. Durch die besondere Geometrie der Statorbleche(3,4) und deren spiegelbildlichen Anordnung, zugleich mit einem 90°-Versatz zum Umfang des Rotors(5) wird die Bedingung erfüllt, beim Anlegen eines Drehfeldes den Motor in zwei Drehrichtungen zu betreiben. Die Ansteuerung der Einzelschritte erfolgt nach dem bekannten Schema entsprechend Fig.10.

Bei der oben beschriebenen Ausführungsvariante nach Fig.1 und 2 liegen die beiden ebenen Statorbleche(3,4) hintereinander und beaufschlagen den Rotor(5) in zwei Ebenen. Dies hat zur Folge , daß eine axiale Kraftkomponente auf den Rotor(5) wirkt, wenn in einer bestimmten Ansteuerphase nur eine Spule bestromt ist. Dies hat zur Folge, daß der Rotor(5) parallel zur Rotationsachse im Rhythmus der Ansteuerfrequenz eine Bewegung ausführt, die sich als störendes Geräusch bemerkbar machen kann.

Zur Vermeidung dieses Nachteils ist an den Statorpolen(7,8), der Ausführungsvariante Fig.5 und 6 eine Lasche(14,15) angebogen. Die Laschen(14,15) tauchen ein in die Aussparungen(16,17) des jeweils anderen Statorblechs. Damit wird der Rotor(13) von beiden Statorpolen mittig umfaßt und somit eine axiale Kraftkomponente auf den Rotor(13) nicht ausgeübt. Auch bei dieser Ausführungsvariante Fig.5 und 6 sind alle Teile der Magnetkreise gleich.

Die geschilderte Konfiguration des erfindungsmäßigen Schrittmotors ermöglicht es auf einfache Art und Weise, sämtliche Einzelteile nacheinander von einer Seite zu montieren. Die für den Zusammenbau erforderliche Fertigungsvorrichtung kann deshalb sehr einfach gestaltet sein. Es muß lediglich dafür Sorge getragen werden, daß die Teile in jeweils vorgesehene zugehörige Positionierungselemente eingreifen. Eine Ausrichtung der Winkellage in Bezug auf die Rotationsachse erübrigt sich.

Durch die Aufteilung eines jeden Statorsystems in zwei deckungsgleiche Elemente reduziert sich der Aufwand erheblich. Hierzu reduziert sich nicht nur die Vielfalt der Teile sondern auch die Werkzeugkosten zur Herstellung der Statorsystemteile. Gleichzeitig erlaubt die Anordnung eine flache Bauweise des Schrittmotors.

## Patentansprüche

1. Elektromagnetischer, zweiphasiger Schrittmotor mit zwei Drehrichtungen, mit einem diametral magnetisierten Permanentmagnet-Rotor(5), zwei Magnetspulen(1,2), die in einer Ebene zueinander unter einem Winkel von 90° angeordnet sind und die jeweils über Statorbleche(3,4) zum Rotor(5) magnetisch gekoppelt sind **dadurch gekennzeichnet,** daß formgleiche Statorbleche(3,4) der beiden Magnetspulenkreise spiegelbildlich zueinander angeordnet sind und daß die bei jedem Statorblech angeformten zwei gegenüberliegenden Statorpole(7,8) zu dem anderen Statorpolpaar des anderen Magnetspulenkreises um 90° versetzt sind.

2. Schrittmotor nach Anspruch 1 **dadurch gekennzeichnet,** daß die Statorbleche(3,4) der beiden Magnetkreise eben und einstückig ausgebildet sind und die beiden gegenüberliegenden Statorpole(7,8) jeweils über Sättigungsstege(9,10) miteinander verbunden sind.

3. Schrittmotor nach Anspruch 1 und 2 **dadurch gekennzeichnet,** daß an den Statorpolen(7,8) Laschen(14,15) angebogen sind, die in die dafür ausgesparten Stellen(16,17) der jeweils anderen Statorblechebene eintauchen und somit die gesamte Rotorlänge übergreifen.
